# EUROPEAN PATENT SPECIFICATION

(11) **EP 1 398 133 B1**
(45) Date of publication and mention of the grant of the patent: **08.07.2009**
(21) Application number: 03077864.1
(22) Date of filing: 11.09.2003
(51) Int. Cl.: B29C 45/14

(54) **Method for manufacturing a body made of synthetic material**
Verfahren zur Herstellung eines Körpers aus Kunststoff
Procédé de fabrication d'un corps en matière synthétique

(30) Priority: 12.09.2002 NL 1021439
(43) Date of publication of application: 17.03.2004
(73) Proprietor: Curana BVBA, 8800 Roeselare (BE)
(72) Inventor: Vens, Dirk, 8800 Roeselare (BE)
(74) Representative: Ostyn, Frans

(56) References cited:
- EP-A- 0 309 325
- WO-A-01/28381
- DE-A- 3 805 314
- GB-A- 1 332 551
- GB-A- 1 576 763
- GB-A- 2 093 754

## Description

The invention relates to a method for manufacturing a body substantially made of synthetic material with the exception of a mudguard, comprising at least one stiffening element.

On the other hand, the present invention also relates to a body substantially made of synthetic material with the exception of a mudguard, comprising a stiffening element.

Applying stiffening elements in a body made of synthetic material in order to increase its rigidity is already known. Thus, it is known from US 4788088 to envelop an elongated stiffening element in a synthetic material by means of extrusion in order to obtain a uniform structure in this manner.
Most of the time metal stiffening elements, for instance of steel wire, are used to this end. By using such stiffening elements, the body made in this manner becomes substantially heavier.

From EP 0 487 476 is known to apply a layer of synthetic material first, in order to obtain a better adherence in this manner between the stiffening element and the enveloping body of synthetic material.

The disadvantage of the methods mentioned above is that bodies of synthetic material are produced with a higher weight.

From the international patent application WO 01/28381 is known to manufacture a suitcase substantially consisting of synthetic material which having a fabric lining on both sides. This suitcase gets its rigidity mainly from its core of expanded synthetic material, the only purpose of the laminated fabric lining is to render the whole more attractive.

Another application of a stiffening element is described in the German patent publication DE 3805314. From this publication is known how to make a clothes hanger with a hard core, which is provided with two outer layers in order to make the whole more attractive. Because the two other layers are not connected to the core, the clothes hanger described gets its strength and rigidity only from the fact that a hard core has been provided.

The European patent application EP-A-1 258 420, which falls under the terms of Art. 54(3) EPC describes a mudguard comprising a stiffening element and a process for making it.

The purpose of the invention is to provide a method for manufacturing bodies, substantially made of synthetic material, in such a manner, that the whole will become light and stable.

The purpose mentioned above is achieved by providing a method for manufacturing a body substantially made of synthetic material with the exception of a mudguard, comprising at least one stiffening element, in accordance with claim 1.

In a preferred method for manufacturing bodies, substantially made of synthetic material according to the invention, the outer layers are made of metal or a synthetic material.

By using a sandwich structure as a stiffening element, a maximum rigidity is created at a minimum weight. Because a sandwich element may indeed have a relatively great thickness, but may consist, for instance, of two thin layers of metal and a thicker, intermediate layer of synthetic material, so that its weight and prime cost will remain limited. The rigidity (also the torsional rigidity) of the sandwich structure is indeed, for the greater part, obtained by the structure and less because of the intrinsic properties of the material. A very light body can be made by means of such a sandwich element, having a sufficient rigidity (and torsional rigidity).

Such bodies may also be produced as a whole by means of a process which may be carried out in a simple manner, such as, for instance, an extrusion process at a relatively low cost with respect to raw material and production.

The sandwich structure of the stiffening element may be obtained from any possible combination of materials.

So, in a preferred embodiment, this sandwich structure may be composed, for instance, of different layers of synthetic material, for instance, two outer layers of a first synthetic material, such as a composite material or a material with glass fibre reinforcement, and an intermediate layer of a second synthetic material (e.g. polypropylene) being provided. Preferably, the first synthetic material is harder than the second synthetic material. The second synthetic material may also be an expanded synthetic material.

An injection moulding process has the advantage that various additional parts may be moulded such that they will make up a whole with the body mainly consisting of synthetic material. This means that the number of parts needed may be reduced and time-consuming assembly operation may be avoided.

Preferably, the stiffening element is enveloped, at least partly, by the material the body is made of.

In a preferred method, said body is moulded by applying an injection moulding process using one, two or more components.

In an injection moulding process, two different synthetic materials may be brought into the injection moulding die according to a known two-component injection moulding process. With an extrusion process also the possibility exists to extrude two different synthetic materials simultaneously. Thus, during the production process, a sandwich structure may be moulded from two different synthetic materials and a separate stiffening element is not needed. This is accompanied by a further simplification of the production process.

In a preferred method according to the invention, the said intermediate layer is substantially made of synthetic material.

According to a more particular preferred method according to the present invention, said body is moulded from a synthetic material which is able to combine with the synthetic material of the intermediate layer when heated, and the body is heated to a temperature where said synthetic materials will combine.

In another preferred method according to the invention, part of the outer layer is removed, before the body combines with the synthetic material of the intermediate layer. This means that a larger contact area is obtained between the intermediate layer and the surrounding body.

In a particularly advantageous preferred method according to the invention, the stiffening element comprises an intermediate layer mainly consisting of the same synthetic material as the synthetic material the said body is made of. Because of this, by heating and combining, a fusion of the synthetic material and the surrounding body enveloping the stiffening element is obtained.

Preferably, the intermediate layer of the stiffening element consists of polypropylene or of polyethylene. Preferably, the outer layers are made of aluminium.

The stiffening element provided, preferably comprises at least two layers of metal, an intermediate layer being provided in between which, substantially, is made of a non-metal.

The metal layers may be relatively thin, for instance 0.2 mm, whereas the intermediate layer may be thicker and may have a thickness of 0.8 mm for instance. Preferably, the material of the intermediate layer will have a significantly lower specific weight than the metal, the metal layers are made of. Because of this, such a stiffening element may have a particularly low weight and yet, also because of its relatively large thickness, it will ensure a particularly great rigidity of a body. An additional advantage of using metal layers is that in some preferred embodiments they may be used as integrated electric conductors, because of which separate electric conductors are no longer needed.

In a most particular method according to the invention, said body is formed in a die by injection moulding, the stiffening element being formed cold, before being brought into the die. Preferably, the said stiffening element is placed in the die previously, so that it is enveloped, at least partly, by the synthetic material brought into the die.

Preferably, the said stiffening element is placed in the die previously, so that it is enveloped, at least partly, by the synthetic material brought into the die.

In another preferred method, the stiffening element comprises a binding agent with which a binding is realized between the metal layers and the intermediate layer of synthetic material.

With certain materials, the adhesion between the material of the outer layers and the material of the intermediate layer may be improved by using a binding agent. A good adhesion between the various materials of the sandwich structure is of great importance as far as the rigidity of the structure is concerned.

Preferably, when applying the method according to the present invention, the stiffening element is formed cold prior to its introduction into the injection moulding die. Very good results are obtained when making use of a plate-shaped laminate of metal and synthetic material, according to the European patent N° EP 0 598 428.

Another object of the present invention is a body substantially made of synthetic material with the exception of a mudguard, comprising at least one stiffening element, whereby the stiffening element comprises two stiff outer layers and an intermediate layer, substantially consisting of a non - metal, which is provided between the outer layers, that the intermediate layer and the outer layers are connected with each other over a substantial part of their contact surface so that they form one entity having a sandwich structure, and that said body is an extruded or an injection moulded body.

Preferably, this body is manufactured according to the method according to the present invention described above.

In order to further clarify the properties of the present invention and to point out its additional advantages and particulars a more detailed description of the method applied and of the possible embodiment of a luggage carrier manufactured according to the present invention will now follow. It may be obvious that nothing of the following description may be interpreted as a restriction of the scope of the protection for this invention or its field of application demanded for in the claims.

In this description, reference is made, by means of reference numbers, to the attached drawings of which:
- figure 1 is a perspective representation of a luggage carrier manufactured according to the invention;
- figure 2 is a perspective representation of the upper surface of the luggage carrier represented in figure 1;

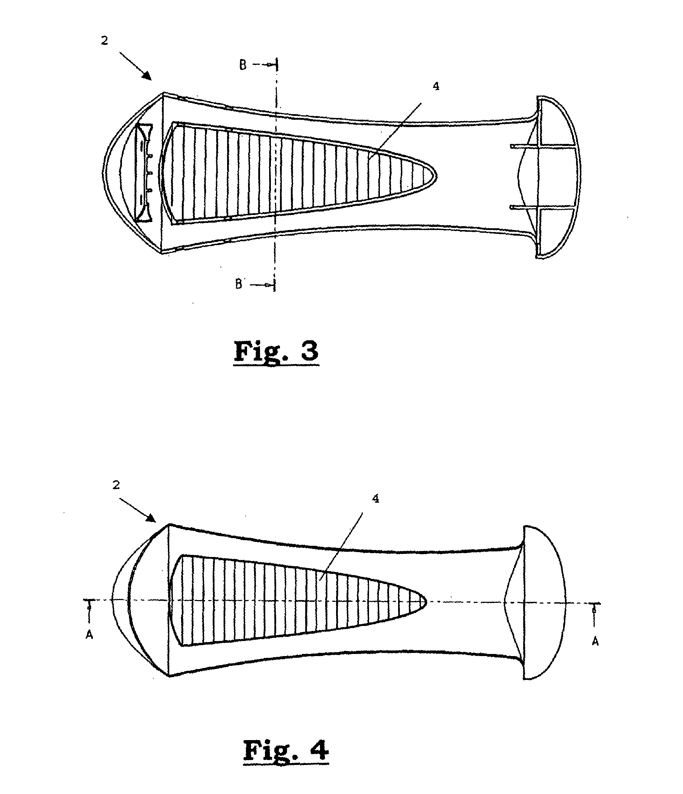

- figure 3 is a top view of the upper surface;
- figure 4 is a bottom view of the upper surface;

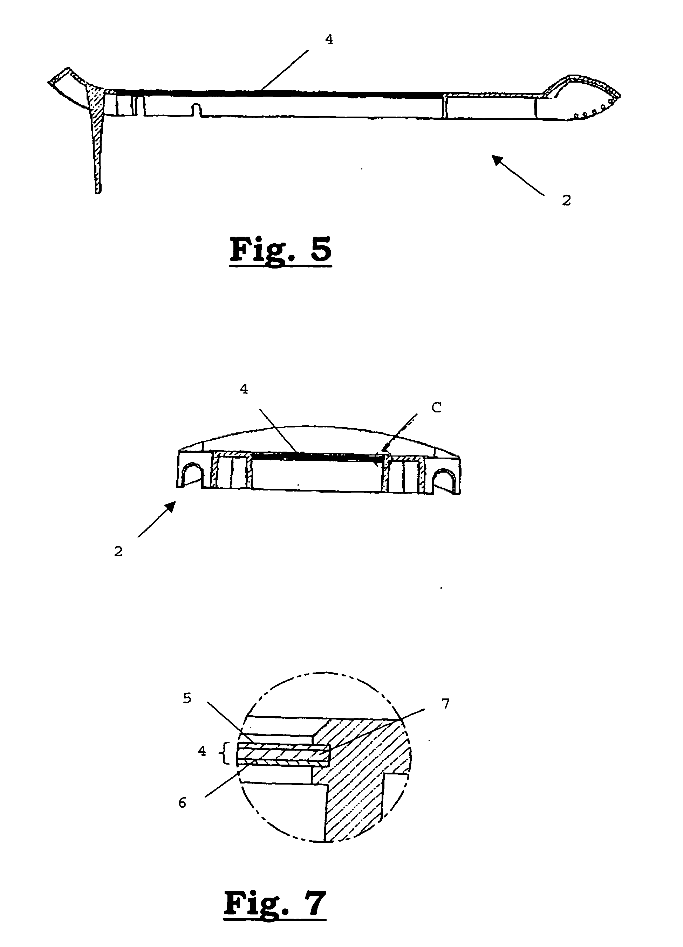

- figure 5 is a cross-section according to the line A-A represented in figure 4;
- figure 6 is a cross-section according to the line B-B represented in figure 3;
- figure 7 is a representation of detail C.

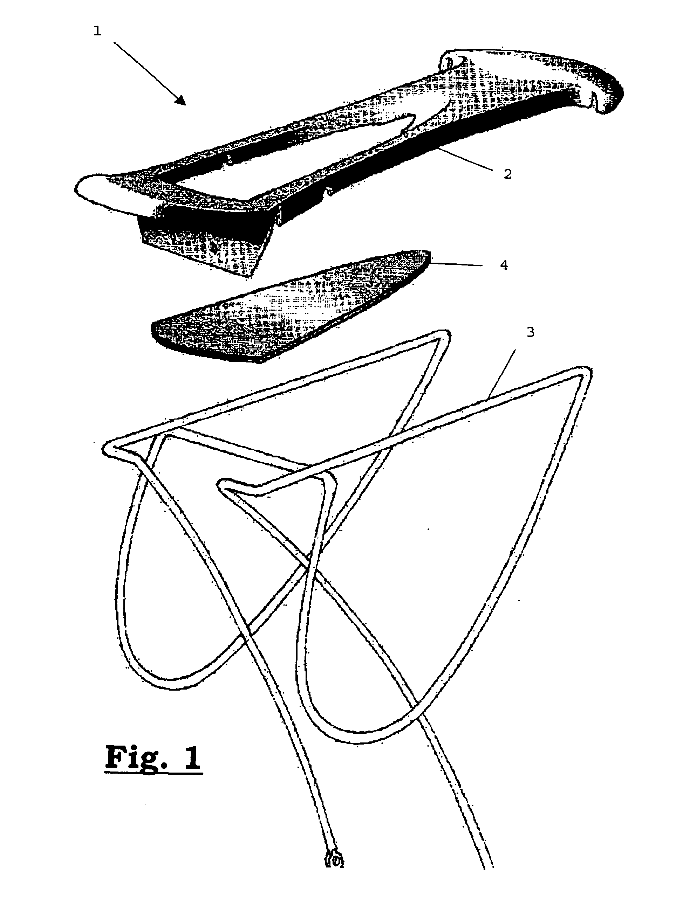

A luggage carrier (1) manufactured according to the invention and as represented in the figures 1 up to and including 7, is composed of a carrying structure (the underframe) (3) and an upper surface (2). Most of the time, the underframe (3) has a wire or tube structure.

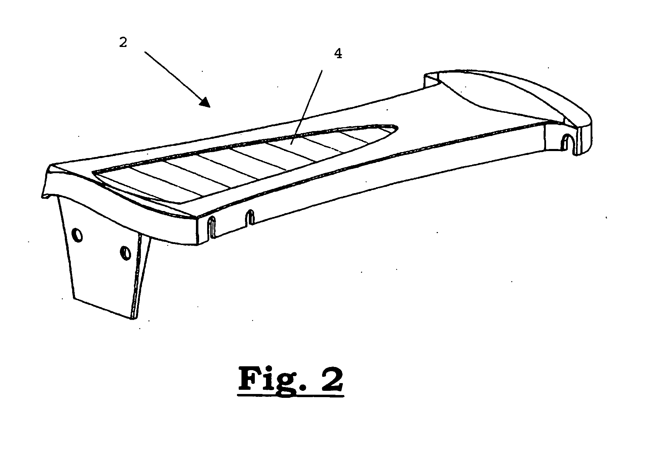

It is in the upper surface (2) that a stiffening element (4), carried out as a sandwich structure, has been included. These sandwich structures which are represented in more detail in figure 2, may be moulded by means of an extrusion process, where two aluminium foils (5 and 6) provided above one another and where an intermediate layer (7) is extruded between these aluminium foils of the same synthetic material as the synthetic material the luggage carrier (1) is composed of.

In the injection moulding die, a preformed stiffening element (4) having a sandwich structure is placed in the die. This stiffening element (4) is carried out in the shape of a plate and consist of an upper (5) and a lower (6) aluminium foil with a thickness of practically 0.2 mm, a polypropylene layer with a thickness of almost 0.8 mm being provided between them. This plate-shaped material further also comprises a binding agent to fix the aluminium foil to polypropylene layer between the two. The binding agent used contains a thermoplastic component such as, for instance, polypropylene and a thermo-hardening component such as, for instance, an epoxy-resin. Such an aluminium-polypropylene-aluminium laminate is described in the European patent N° EP 0 598 428 and is sold by the name of Hylite.

In a first stage of the method applied, a stiffening element (4) of the shape required is formed from a flat strip of the plate-shaped laminate described above. This is done by means of a cold deformation of the material, for instance, by rolling or pressing the material.

In a next stage the so formed stiffening element (4) is placed in the die, where it is clamped between the upper and the lower die. Then the injection moulding process is started, a polypropylene being brought into the die and the upper surface (2) is formed from polypropylene, whereas the stiffening element (4) is enveloped by this synthetic material.

With the method according to the present invention, the connection between the sandwich element and the surrounding synthetic material is optimal when there is a sufficiently large contact surface. In the case of the Hylite, this is only 0.8 mm of polypropylene. In order to increase this contact surface, a part of the aluminium skin may be removed.

Care can be taken, that certain parts of the stiffening element (4) will not be covered by the synthetic material and therefore will remain visible in order to obtain an aesthetic aspect. Thus, several zones of the stiffening element (4) may be left visible according to a well-determined pattern.

Finally it should be noted that, by using the method described above, it will be possible to manufacture a wide range of the most varying products, so not only parts for bicycles, such as, for instance, a dress-guard or a chain-guard, but also other products, such as, for instance, a chair, a briefcase or a suitcase, a light fitting or a computer casing are possible. Each time, a product with a light weight and a high stability is obtained.

## Claims

1. Method for manufacturing a body substantially made of synthetic material by applying an extrusion process or an injection moulding process, with the exception of a mudguard, comprising at least one stiffening element (4), **characterized in that** the stiffening element (4) comprises two stiff outer layers (5),(6) and an intermediate layer (7), substantially consisting of a non - metal, which is provided between the outer layers (5), (6), and that the intermediate layer (7) and the outer layers (5),(6) are connected with each other over a substantial part of their contact surface so that they form one entity having a sandwich structure.

2. Method according claim 1, **characterized in that** the outer layers (5),(6) are made of metal or a synthetic material.

3. Method according to claim 1 or 2, **characterized in that** said body is formed by applying an injection moulding process using two or more components.

4. Method according to any one of the preceding claims, **characterized in that** said intermediate layer (7) is substantially manufactured of a synthetic material.

5. Method for manufacturing the body according to claim 4,
**characterized in that** said body is formed from a synthetic material which is able to combine with the synthetic material of the intermediate layer (7) when heated and **in that** the body is heated to a temperature where the said synthetic materials will combine.

6. Method according to claim 5, **characterized in that** part of the outer layer is removed, before the body combines with the synthetic material of the intermediate layer (7).

7. Method according to any one of the claims 4 up to and including 6, **characterized in that** the stiffening element (4) comprises an intermediate layer (7) substantially consisting of the same synthetic material as the material said body is made of.

8. Method according to any one of the claims 4 up to and including 7, **characterized in that** the stiffening element (4) comprises an intermediate layer (7) which is made of polypropylene or of polyethylene.

9. Method according to any one of the preceding claims, **characterized in that** the outer layers (5),(6) are made of aluminium.

10. Method for manufacturing a body according to any one of the preceding claims, **characterized in that** said body is formed in a die by means of an injection moulding process, the stiffening element (4) being formed cold before it is brought into the die.

11. An extruded or injection moulded body substantially made of synthetic material with the exception of a mudguard, comprising at least one stiffening element (4), **characterized in that** the stiffening element (4) comprises two stiff outer layers (5),(6) and an intermediate layer (7), substantially consisting of a non - metal, which is provided between the outer layers (5), (6), and that the intermediate layer (7) and the outer layers (5),(6) are connected with each other over a substantial part of their contact surface so that they form one entity having a sandwich structure.

12. A body substantially made of synthetic material according to claim 11, **characterized in that** it is manufactured according to a method according to any one of the claims 2 to 10.

## Patentansprüche

1. Verfahren zur Herstellung eines im wesentlichen aus Kunststoff bestehenden Körpers durch Anwendung eines Extrusionsverfahrens oder eines Spritzgießverfahrens, mit Ausnahme eines Schutzbleches oder Kotflügels, wobei der Körper mindestens ein Versteifungselement (4) umfasst, **dadurch gekennzeichnet, dass** das Versteifungselement (4) zwei steife äußere Schichten (5),(6) umfasst sowie eine im wesentlichen aus Nichtmetall bestehende Zwischenschicht (7), die zwischen den äußeren Schichten (5),(6) vorgesehen ist, und dass die Zwischenschicht (7) und die äußeren Schichten (5), (6) über einen wesentlichen Teil ihrer Kontaktfläche derart miteinander verbunden werden, dass sie eine eine Sandwich-Struktur aufweisende Einheit bilden.

2. Verfahren nach Anspruch 1, **dadurch gekennzeichnet, dass** die äußeren Schichten (5), (6) aus Metall oder aus Kunststoff bestehen.

3. Verfahren nach Anspruch 1 oder 2, **dadurch gekennzeichnet, dass** der Körper durch Anwendung eines Spritzgießverfahrens unter Verwendung zweier oder mehrerer Komponenten geformt wird.

4. Verfahren nach einem der vorangehenden Ansprüche, **dadurch gekennzeichnet, dass** die Zwischenschicht (7) im wesentlichen aus einem Kunststoff hergestellt wird.

5. Verfahren zur Herstellung des Körpers nach Anspruch 4, **dadurch gekennzeichnet, dass** der Körper aus einem Kunststoff gebildet wird, der in der Lage ist, sich bei Erhitzen mit dem Kunststoff der Zwischenschicht (7) zu verbinden, und dass der Körper auf eine Temperatur erhitzt wird, bei der sich die Kunststoffe miteinander verbinden.

6. Verfahren nach Anspruch 5, **dadurch gekennzeichnet, dass** ein Teil der äußeren Schicht entfernt wird, bevor sich der Körper mit dem Kunststoff der Zwischenschicht (7) verbindet.

7. Verfahren nach einem der Ansprüche 4 bis einschließlich 6, **dadurch gekennzeichnet, dass** das Versteifungselement (4) eine Zwischenschicht (7) umfasst, die im wesentlichen aus dem gleichen Kunststoffmaterial besteht, aus dem der Körper aufgebaut ist.

8. Verfahren nach einem der Ansprüche 4 bis einschließlich 7, **dadurch gekennzeichnet, dass** das Versteifungselement (4) eine Zwischenschicht (7) umfasst, die aus Polypropylen oder aus Polyethylen hergestellt ist.

9. Verfahren nach einem der vorangehenden Ansprüche, **dadurch gekennzeichnet, dass** die äußeren Schichten (5),(6) aus Aluminium hergestellt sind.

10. Verfahren zur Herstellung eines Körpers nach einem der vorangehenden Ansprüche, **dadurch gekennzeichnet, dass** der Körper in einem Werkzeug mittels eines Spritzgießverfahrens geformt wird, wobei das Versteifungselement (4) vor seiner Einführung in das Werkzeug kaltgeformt wird.

11. Extrudierter oder spritzgegossener, im wesentlichen aus Kunststoff bestehender Körper, mit Ausnahme eines Schutzbleches oder Kotflügels, wobei der Körper wenigstens ein Versteifungselement (4) umfasst, **dadurch gekennzeichnet, dass** das Versteifungselement (4) zwei steife äußere Schichten (5),(6) umfasst sowie eine im wesentlichen aus Nichtmetall bestehende Zwischenschicht (7), die zwischen den äußeren Schichten (5),(6) vorgesehen ist, und dass die Zwischenschicht (7) und die äußeren Schichten (5),(6) über einen wesentlichen Teil ihrer Kontaktfläche derart miteinander verbunden sind, dass sie eine eine Sandwich-Struktur aufweisende Einheit bilden.

12. Körper, im wesentlichen bestehend aus Kunststoff, nach Anspruch 11, **dadurch gekennzeichnet, dass** der Körper nach einem Verfahren gemäß einem der Ansprüche 2 bis 10 hergestellt wurde.

## Revendications

1. Procédé de fabrication d'un corps, à l'exception d'un garde-boue, constitué essentiellement d'un matériau synthétique et comprenant au moins un élément de rigidification (4), par recours à une opération d'extrusion ou une opération de moulage par injection, **caractérisé en ce que** l'élément de rigidification (4) comprend deux couches extérieures rigides (5), (6) et une couche intermédiaire (7) essentiellement constituée d'un non-métal et prévue entre les couches extérieures (5), (6) et
**en ce que** la couche intermédiaire (7) et les couches extérieures (5), (6) sont reliées mutuellement sur une partie essentielle de leurs surfaces de contact de telle sorte qu'elles forment une entité qui possède une structure en sandwich.

2. Procédé selon la revendication 1, **caractérisé en ce que** les couches extérieures (5), (6) sont constituées de métal ou d'un matériau synthétique.

3. Procédé selon les revendications 1 ou 2, **caractérisé en ce que** ledit corps est formé en recourant à une opération de moulage par injection utilisant deux ou plusieurs composants.

4. Procédé selon l'une quelconque des revendications précédentes, **caractérisé en ce que** ladite couche intermédiaire (7) est fabriquée essentiellement en un matériau synthétique.

5. Procédé pour la fabrication du corps selon la revendication 4, **caractérisé en ce que** ledit corps est formé d'un matériau synthétique capable de se combiner avec le matériau synthétique de la couche intermédiaire (7) lorsqu'il est chauffé et **en ce que** le corps est chauffé à une température à laquelle lesdits matériaux synthétiques se combinent.

6. Procédé selon la revendication 5, **caractérisé en ce qu'**une partie de la couche externe est enlevée avant que le corps soit combiné avec le matériau synthétique de la couche intermédiaire (7).

7. Procédé selon l'une quelconque des revendications 4 à 6 incluse, **caractérisé en ce que** l'élément de rigidification (4) comprend une couche intermédiaire (7) constituée essentiellement du même matériau synthétique que dont ledit corps est constitué.

8. Procédé selon l'une quelconque des revendications 4 à 7 incluse, **caractérisé en ce que** l'élément de rigidification (4) comprend une couche intermédiaire (7) constituée de polypropylène ou de polyéthylène.

9. Procédé selon l'une quelconque des revendications précédentes, **caractérisé en ce que** les couches extérieures (5), (6) sont constituées d'aluminium.

10. Procédé de fabrication d'un corps selon l'une quelconque des revendications précédentes, **caractérisé en ce que** ledit corps est formé dans une matrice en recourant à une opération de moulage par injection, l'élément de rigidification (4) étant façonné à froid avant d'être amené dans la matrice.

11. Corps extrudé ou moulé par injection, à l'exception d'un garde-boue, essentiellement constitué de matière synthétique et comprenant au moins un élément de rigidification (4),
**caractérisé en ce que** l'élément de rigidification (4) comprend deux couches extérieures rigides (5), (6) et une couche intermédiaire (7) essentiellement constituée d'un non-métal et prévue entre les couches extérieures (5), (6) et **en ce que** la couche intermédiaire (7) et les couches extérieures (5), (6) sont reliées mutuellement sur une partie essentielle de leurs surfaces de contact de telle sorte qu'elles forment une entité qui possède une structure en sandwich.

12. Corps essentiellement constitué de matière synthétique selon la revendication 11, **caractérisé en ce qu'**il est fabriqué à l'aide d'un procédé selon l'une quelconque des revendications 2 à 10.
